# FASCICULE DE BREVET EUROPEEN

(11) **EP 1 800 250 B1**
(45) Date de publication et mention de la délivrance du brevet: **30.01.2013**
(21) Numéro de dépôt: 05800270.0
(22) Date de dépôt: 23.09.2005
(51) Int. Cl.: G06K 13/08

(54) **DISPOSITIF DE RENFORT DE LECTEUR DE CARTES A FENTE**
VERSTÄRKUNGSEINRICHTUNG FÜR EINEN SCHLITZKARTENLESER
REINFORCING DEVICE FOR SLOT CARD READER

(30) Priorité: 23.09.2004 FR 0452136
(43) Date de publication de la demande: 27.06.2007
(73) Titulaire: Ingenico France, 92200 Neuilly Sur Seine (FR)
(72) Inventeur: DUBOIS, Eric, F-26120 MONTVENDRE (FR)
(74) Mandataire: de Beaumont, Michel
(86) Numéro de dépôt international: PCT/FR2005/050774
(87) Numéro de publication internationale: WO 2006/032825

(56) Documents cités:
- US-A- 5 065 001
- US-A- 5 331 139

## Description

### Domaine de l'invention

La présente invention concerne un dispositif de renfort d'un lecteur de cartes à fente. Plus précisément, la présente invention concerne un dispositif de renfort d'un lecteur de cartes à fente (correspondant à l'expression anglaise "Swipe Reader"), du type lecteur magnétique ou optique, dans lequel le passage d'une carte dans la fente du lecteur est réalisé de façon manuelle ou motorisée.

### Exposé de l'art antérieur

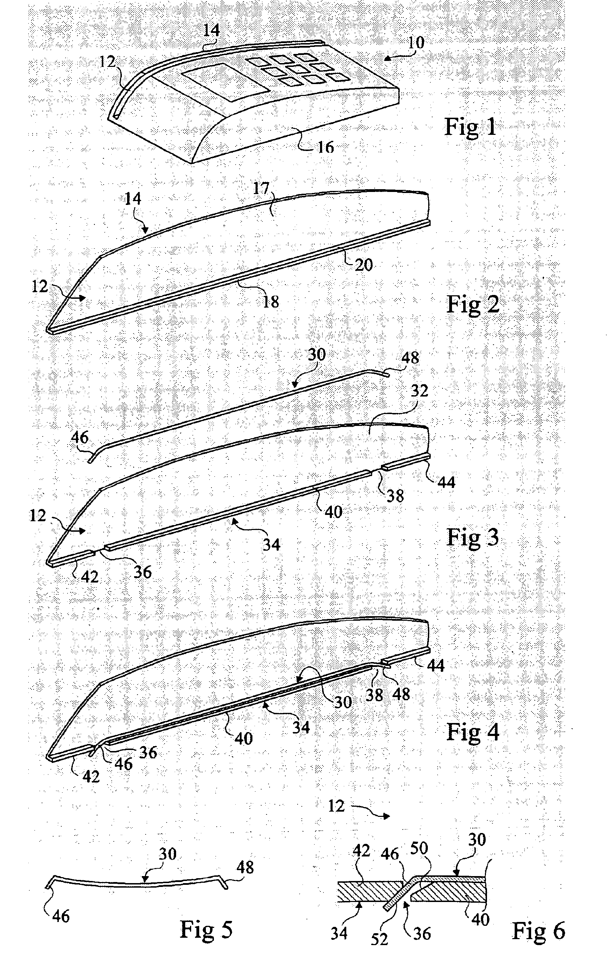

La figure 1 représente, de façon schématique, un exemple classique de lecteur magnétique ou optique 10 de carte. Le lecteur 10 comprend une fente latérale 12 dans laquelle un utilisateur peut faire coulisser une carte (non représentée). La fente 12 est délimitée par un bord latéral 14 du lecteur 10 et par le corps du lecteur 16. Le lecteur 10 comprend une tête de lecture (non représentée) adaptée à lire des données stockées sur la carte. Il peut s'agir d'une tête de lecture magnétique adaptée à lire des données stockées sous la forme d'une bande magnétique disposée sur la carte. Il peut également s'agir d'une tête de lecture optique adaptée à lire des données stockées sous la forme d'un code à barres réalisé sur la carte.

La figure 2 représente, de façon schématique, le bord latéral 14 du lecteur 10 de la figure 1 qui se compose d'un flasque latéral 17 qui délimite un côté de la fente 12 et d'une base 18 qui délimite le fond de la fente 12. Le côté de la fente 12 opposé au flasque 17 est délimité par une pièce ou plusieurs pièces du lecteur 10 non représentées. Le bord 14 est généralement constitué d'un matériau plastique permettant la fabrication du bord 14 à faible coût.

Afin d'améliorer le glissement des cartes dans la fente 12 et d'éviter une usure rapide de la base 18 lors de passages successifs de cartes dans la fente 12, la base 18 est recouverte d'une bande de renfort 20 sur laquelle on fait glisser les cartes. La bande de renfort 20 est généralement constituée d'un matériau à faible coefficient de frottement et résistant à l'usure, par exemple de l'acier. Une telle bande de renfort 20 est généralement réalisée par une opération de surmoulage réalisée sur la base 18. Il s'agit toutefois d'un procédé relativement complexe et ayant un coût non négligeable.

Le brevet américain n° 5 065 001, cédé à la société Welch Allyn, décrit un lecteur de cartes à fente dans lequel la bande de renfort est constituée d'une bande plane découpée et maintenue dans des rainures prévues au niveau de la fente. La position de la bande de renfort dans la fente peut être ajustée en prévoyant plusieurs rainures parallèles, ce qui permet d'utiliser le lecteur pour des cartes de dimensions différentes.

Pour guider de façon sûre le déplacement d'une carte dans la fente, il peut être souhaitable de prévoir une fente 12 dont la surface médiane n'est pas parfaitement plane mais présente une légère courbure selon la direction longitudinale de la fente. La carte est alors, de façon temporaire, légèrement déformée lors de son passage dans la fente, ce qui assure un positionnement correct de la carte par rapport à la tête de lecture.

Dans ce cas, l'utilisation d'une bande de renfort rapportée est délicate. En effet, il est alors nécessaire de prévoir des opérations de découpes spécifiques pour obtenir une bande de renfort dont les côtés longitudinaux suivent la courbure de la fente.

### Résumé de l'invention

La présente invention vise à proposer un dispositif de renfort du fond d'une fente d'un lecteur de cartes à fente pouvant s'adapter indifféremment à des lecteurs de cartes comportant une fente rectiligne ou légèrement incurvée.

Un autre objet de la présente invention est de prévoir un dispositif de renfort d'un lecteur de cartes à fente dont le montage est simple.

Un autre objet de la présente invention est de prévoir un dispositif de renfort d'un lecteur de cartes à fente de conception simple.

Pour atteindre ces objets, la présente invention prévoit un dispositif de renfort d'un lecteur de cartes comportant une fente au moins en partie délimitée par une base et deux parois latérales et s'étendant selon une direction longitudinale, ladite fente étant destinée à recevoir une carte se déplaçant selon ladite direction longitudinale en s'appuyant sur la base. Le dispositif comprend un fil de section sensiblement circulaire disposé au niveau de la base et sur lequel la carte est destinée à glisser.

Selon un mode de réalisation de la présente invention, les parois latérales de la fente présentent une courbure par rapport à un axe perpendiculaire à ladite base.

Selon un mode de réalisation de la présente invention, le diamètre du fil est sensiblement égal à la largeur de la fente.

Selon un mode de réalisation de la présente invention, avant mise en place, le fil présente une certaine courbure par rapport à un axe transverse à la fente.

Selon un mode de réalisation de la présente invention, le fil comprend deux extrémités inclinées et la base comprend deux encoches recevant lesdites extrémités inclinées.

Selon un mode de réalisation de la présente invention, chaque encoche comprend au moins une surface biseautée pour faciliter l'introduction et/ou le maintien dans ladite encoche de l'extrémité inclinée associée.

La présente invention vise également un lecteur de cartes comportant une fente au moins en partie délimitée par une base et deux parois latérales et s'étendant selon une direction longitudinale, ladite fente étant destinée à recevoir une carte se déplaçant selon ladite direction longitudinale en s'appuyant sur la base; le lecteur comprenant un dispositif de renfort tel que défini précédemment.

### Brève description des dessins

Ces objets, caractéristiques et avantages, ainsi que d'autres de la présente invention seront exposés en détail dans la description suivante d'un exemple de réalisation particulier faite à titre non-limitatif en relation avec les figures jointes parmi lesquelles :
la figure 1, précédemment décrite, représente un lecteur de cartes à fente classique ;
la figure 2, précédemment décrite, représente schématiquement un exemple de réalisation d'un dispositif de renfort du lecteur de la figure 1 ;
la figure 3 représente un exemple de réalisation d'un dispositif de renfort selon l'invention d'un lecteur de cartes à fente, le dispositif de renfort étant représenté à l'extérieur de la fente ;
la figure 4 représente le dispositif de renfort de la figure 3 monté dans le lecteur ;
la figure 5 représente une variante de réalisation du dispositif de renfort selon l'invention ; et
la figure 6 représente un détail de réalisation du lecteur au niveau d'une extrémité du dispositif de renfort.

### Description détaillée

Par souci de clarté, de mêmes éléments ont été désignés par de mêmes références aux différentes figures.

La présente invention consiste en un dispositif de renfort du fond d'une fente d'un lecteur de cartes à fente qui se compose d'un fil de section sensiblement circulaire constitué d'un matériau à faible coefficient de frottement et résistant à l'usure, par exemple de l'acier. Lors de la mise en place du fil au niveau du fond de la fente du lecteur, le fil peut alors facilement être déformé pour s'adapter à la courbure de la fente.

La figure 3 représente un exemple de réalisation du dispositif de renfort 30 selon l'invention et d'éléments d'un lecteur de cartes à fente destiné à recevoir un tel dispositif.

De façon analogue à la figure 2, la fente 12 est, sur un côté, délimitée par un flasque latéral 32 et, sur l'autre côté, par des pièces, non représentées, du lecteur de cartes. Le fond de la fente 12 est délimité par une base 34, qui dans l'exemple représenté est solidaire du flasque latéral 32. Toutefois, la base 34 peut correspondre à une pièce distincte du flasque 32. Deux encoches 36, 38 séparent la base 34 en une partie centrale 40 et deux parties d'extrémité 42, 44.

Le dispositif de renfort 30 se compose d'un fil de section circulaire rectiligne dont les extrémités 46, 48 sont inclinées. A titre d'exemple, pour un lecteur de cartes portable, le fil 30 peut avoir un diamètre de l'ordre du millimètre. Le diamètre du fil de renfort correspond sensiblement à la largeur de la fente 12. Ainsi, lorsque le fil 30 est mis en place dans la fente 12, il s'adapte à la forme de la fente 12 sous l'action des parois latérales délimitant la fente 12.

La figure 4 représente le dispositif de renfort 30 selon le présent exemple de réalisation monté au niveau de la base 34 de la fente 12. Les extrémités 46, 48 inclinées du fil 30 pénètrent dans les encoches 36, 38 de la base 34. Le montage du fil 30 au niveau de la base 34 est réalisé en déformant temporairement le fil 30 de façon à faire pénétrer les extrémités inclinées 46, 48 dans les encoches 36, 38. On relâche ensuite le fil 30. Les portions d'extrémité 42, 44 maintiennent alors les extrémités 46, 48 dans les encoches 36, 38 de sorte que, une fois monté, le fil 30 ne peut être retiré sans exercer une force de traction suffisante sur celui-ci. Lors du passage d'une carte dans la fente 12, la tranche de la carte glisse sur le fil 30 évitant une usure rapide de la base 34.

La figure 5 représente une variante de réalisation du dispositif de renfort 30. Selon la présente variante, le fil est, en l'absence de contrainte extérieure, légèrement incurvé entre les extrémités inclinées 46, 48. L'introduction des extrémités 46, 48 du fil 30 dans les encoches 36, 38 entraîne alors une déformation de la partie centrale du fil 30 de sorte que, une fois monté, la totalité du fil 30 est plaquée cqntre la base 34. On élimine ainsi tout jeu entre le fil 30 et la base 34.

La figure 6 représente, de façon plus détaillée, une variante de réalisation des encoches 36, 38, seule l'encoche 36 étant représentée. La partie centrale 40 de la base 34 comprend, au niveau de l'encoche 36, une surface biseautée 50, orientée vers la fente 12. La partie d'extrémité 42 de la base 34 comprend, au niveau de l'encoche 36, une surface biseautée 52, orientée du côté opposé à la fente 12. La surface biseautée 50 guide l'extrémité inclinée 46 du fil 30 vers l'encoche 36 lors du montage du fil 30 sur la base 34. En outre, lorsque le fil 30 est monté, la surface biseautée 50 permet de tenir compte d'éventuelles variations de la courbure de la portion arrondie reliant l'extrémité inclinée 46 et la partie centrale 40 du fil 30. La surface biseautée 52 facilite le maintien de l'extrémité inclinée 46 dans l'encoche 36. La surface biseautée 46 peut, en outre, comprendre une rainure dont la forme est complémentaire de la forme de l'extrémité inclinée 46 du fil 30 pour améliorer le maintien en position du fil 30 une fois monté sur la base 34.

L'utilisation d'un dispositif de renfort sous la forme d'un fil cylindrique permet avantageusement d'utiliser le même dispositif de renfort pour différentes formes de fentes, et en particulier, pour une fente qui n'est pas parfaitement rectiligne mais qui a une légère courbure selon la direction longitudinale de la fente.

En outre, selon l'exemple de réalisation particulier précédemment décrit, les extrémités inclinées du dispositif de renfort constituent des surfaces d'amorce "douces" lors du passage d'une carte dans la fente. Ceci permet avantageusement de limiter toute détérioration de la carte.

De plus, selon l'exemple de réalisation particulier précédemment décrit, le montage du dispositif de renfort selon la présente invention dans un lecteur est particulièrement simple puisqu'il est obtenu par une légère déformation temporaire du fil pour introduire les extrémités inclinées du fil dans les encoches correspondantes prévues au niveau de la base.

Bien entendu, la présente invention est susceptible de diverses variantes et modifications qui apparaîtront à l'homme de l'art. En particulier, la fixation du dispositif de renfort sur la base peut être réalisée par d'autres moyens, par exemple par collage.

## Revendications

1. Dispositif de renfort (30) d'un lecteur (10) de cartes comportant une fente (12) au moins en partie délimitée par une base (34) et deux parois latérales (17) et s'étendant selon une direction longitudinale, ladite fente étant destinée à recevoir une carte se déplaçant selon ladite direction longitudinale en s'appuyant sur la base, **caractérisé en ce que** le dispositif comprenant un fil (30) de section sensiblement circulaire disposé au niveau de la base et sur lequel la carte est destinée à glisser.

2. Dispositif selon la revendication 1, dans lequel les parois latérales (17) de la fente (12) présentent une courbure par rapport à un axe perpendiculaire à ladite base (34).

3. Dispositif selon la revendication 1, dans lequel le diamètre du fil (30) est sensiblement égal à la largeur de la fente (12).

4. Dispositif selon la revendication 1, dans lequel, avant mise en place, le fil (30) présente une certaine courbure par rapport à un axe transverse à la fente (12).

5. Dispositif selon la revendication 1, dans lequel le fil comprend deux extrémités inclinées (46, 48) et dans lequel la base (34) comprend deux encoches (36, 38) recevant lesdites extrémités inclinées.

6. Dispositif selon la revendication 5, dans lequel chaque encoche (36, 38) comprend au moins une surface biseautée pour faciliter l'introduction et/ou le maintien dans ladite encoche de l'extrémité inclinée (46, 48) associée.

7. Lecteur (10) de cartes comportant une fente (12) au moins en partie délimitée par une base (34) et deux parois latérales (17) et s'étendant selon une direction longitudinale, ladite fente étant destinée à recevoir une carte se déplaçant selon ladite direction longitudinale en s'appuyant sur la base, le lecteur comprenant un dispositif de renfort (30) selon la revendication 1.

## Claims

1. A device (30) for strengthening a card reader (10) comprising a slot (12) at least partly delimited by a base (34) and two lateral walls (17) and extending along a longitudinal direction, said slot being intended to receive a card moving along said longitudinal direction while bearing on the base, **characterized in that** the device comprises a wire (30) of substantially circular cross-section disposed at the level of the base and on which the card is intended to slide.

2. The device of claim 1, wherein the lateral walls (17) of the slot (12) exhibit a curvature with respect to an axis perpendicular to said base (34).

3. The device of claim 1, wherein the diameter of the wire (30) is substantially equal to the width of the slot (12) .

4. The device of claim 1, wherein, before being arranged, the wire (30) exhibits a curvature with respect to an axis transverse to the slot (12).

5. The device of claim 1, wherein the wire comprises two inclined ends (46, 48) and wherein the base (34) comprises two notches (36, 38) receiving said inclined ends.

6. The device of claim 5, wherein each notch (36, 38) comprises at least one tapered surface to ease the introduction and/or the maintaining in said notch of the associated inclined end (46, 48).

7. A card reader (10) comprising a slot (12) at least partly delimited by a base (34) and two lateral walls (17) and extending along a longitudinal direction, said slot being intended to receive a card moving along said longitudinal direction while bearing on the base, the reader comprising the strengthening device (30) of claim 1.

## Patentansprüche

1. Eine Vorrichtung (30) zur Verstärkung eines Kartenlesers (10) der folgendes aufweist:
einen Schlitz (12) mindestens teilsweise begrenzt durch eine Basis (34) und zwei Seitenwände (17) und sich entlang einer Längsrichtung erstreckend, wobei der Schlitz dazu dient eine Karte aufzunehmen, die sich längs der erwähnten Längsrichtung während der Anlage an der Basis bewegt, **dadurch gekennzeichnet, dass** die Vorrichtung einen Draht (30) aufweist, der einen im wesentlichen kreisförmigen Querschnitt besitzt und angeordnet ist auf dem Niveau der Basis auf der die Karte gleiten soll.

2. Vorrichtung nach Anspruch 1, wobei die Seitenwände (17) des Schlitzes (12) eine Krümmung bezüglich einer Achse senkrecht zu der Basis (34) aufweisen.

3. Vorrichtung nach Anspruch 1, wobei der Durchmesser des Drahtes (30) im wesentlichen gleich der Breite des Schlitzes (12) ist.

4. Vorrichtung nach Anspruch 1, wobei vor der Anordnung der Draht (30) eine Krümmung zeigt und zwar bezüglich einer Achse quer zum Schlitz (12).

5. Vorrichtung nach Anspruch 1, wobei der Draht zwei geneigte Enden (46, 48) aufweist und wobei die Basis (34) zwei Nuten (36, 38) aufweist, die die geneigten Enden aufnehmen.

6. Vorrichtung nach Anspruch 5, wobei jede Nut (36, 38) mindestens eine verjüngte Oberfläche aufweist, um die Einführung und/oder die Beibehaltung des zugehörigen geneigten Endes (46, 48) in der Nut zu erleichtern.

7. Kartenleser (10) mit einem Schlitz (12) der mindestens teilweise durch eine Basis (34) und zwei Seitenwände (17) begrenzt ist und zwar sich in einer Längsrichtung erstreckend, wobei der Schlitz zur Aufnahme einer Karte vorgesehen ist, die sich längs in der erwähnten Längsrichtung während der Auflage auf der Basis bewegt, wobei der Leser die Verstärkungsvorrichtung (30) nach Anspruch 1 aufweist.
